# EUROPÄISCHE PATENTSCHRIFT

(11) **EP 2 958 735 B1**
(45) Veröffentlichungstag und Bekanntmachung des Hinweises auf die Patenterteilung: **31.01.2018**
(21) Anmeldenummer: 14715878.6
(22) Anmeldetag: 30.03.2014
(51) Int. Cl.: B29C 67/00, B22F 3/105

(54) **ROTATIONSBESCHICHTER UND VORRICHTUNG ZUM GENERATIVEN HERSTELLEN EINES OBJEKTS MIT DEM ROTATIONSBESCHICHTER**
ROTARY RECOATER AND DEVICE FOR THE GENERATIVE PRODUCTION OF AN OBJECT USING THE ROTARY RECOATER
TOURNETTE ET DISPOSITIF DESTINÉ À LA PRODUCTION GÉNÉRATIVE D'UN OBJET AU MOYEN DE LA TOURNETTE

(30) Priorität: 11.04.2013 DE 102013206458
(43) Veröffentlichungstag der Anmeldung: 30.12.2015
(73) Patentinhaber: EOS GmbH Electro Optical Systems, 82152 Krailling (DE)
(72) Erfinder: HALDER, Thomas, 81371 München (DE); THOMA, Axel, 82205 Gilching (DE)
(74) Vertreter: Prüfer & Partner mbB Patentanwälte · Rechtsanwälte
(86) Internationale Anmeldenummer: PCT/EP2014/056387
(87) Internationale Veröffentlichungsnummer: WO 2014/166769

(56) Entgegenhaltungen:
- EP-A1- 1 234 625
- EP-A1- 1 925 432
- EP-A1- 2 399 695
- GB-A- 2 450 425

## Beschreibung

Die vorliegende Erfindung bezieht sich auf einen Rotationsbeschichter für eine Vorrichtung zum generativen Herstellen eines Objekts, sowie auf eine Vorrichtung zum generativen Herstellen eines Objekts, die den Rotationsbeschichter aufweist.

Aus der EP 1 925 432 A1 ist eine Vorrichtung zum generativen Herstellen eines Objekts bekannt, die einen Rotationsbeschichter aufweist. Der Rotationsbeschichter hat einen Träger, der an einer Drehachse mit der Vorrichtung drehbar verbindbar ist, sowie ein Beschichtungselement, das an den Träger gekoppelt und geeignet ist, bei der Drehbewegung des Trägers eine Pulverschicht in einem Baufeld bzw. in einer Ebene aufzutragen oder zu glätten, die senkrecht zur Drehachse verläuft. Der mechanische Aufbau dieses Rotationsbeschichters ist relativ einfach verglichen mit einem Beschichter, welcher mittels Linearführungen oder Schienen translatorisch bewegt wird. Andererseits kann ein translatorisch angetriebener Beschichter eine ausgezeichnete Bauteilgüte erzielen.

Es ist die Aufgabe der vorliegenden Erfindung, einen Beschichter für eine Vorrichtung zum generativen Herstellen eines Objekts sowie eine Vorrichtung zum generativen Herstellen eines Objekts mit dem Rotationsbeschichter vorzusehen, die die Vorteile eines Rotationsbeschichters und eines translatorisch angetriebenen Beschichters vereinen.

Diese Aufgabe wird durch einen Rotationsbeschichter mit den Merkmalen des Anspruchs 1 und durch eine Vorrichtung zum Herstellen eines dreidimensionalen Objekts mit den Merkmalen des Anspruchs 11 gelöst. Vorteilhafte Weiterbildungen sind Gegenstand der Unteransprüche.

Die Erfinder der vorliegenden Erfindung haben herausgefunden, dass die Bauteilgüte durch eine homogene Pulverschicht verbessert werden kann. Eine homogene Pulverschicht wird wiederum erreicht, wenn die Geschwindigkeit des Beschichtungselements über alle Punkte im Baufeld konstant ist. Bisher waren aufgrund der Orbitalbewegung des Beschichtungselements dessen Geschwindigkeiten in allen Punkte des Baufelds nicht konstant. Folglich kann die Bauteilgüte verbessert werden, wenn das Beschichtungselement eines Rotationsbeschichters seine Orientierung bei der Drehbewegung des Trägers im Wesentlichen beibehält, und wenn gleichzeitig das Beschichtungselement in seiner Längsrichtung im Wesentlichen keine Bewegung bei der Drehbewegung des Trägers durchführt.

Weitere Merkmale und Zweckmäßigkeiten der Erfindung ergeben sich aus der Beschreibung von Ausführungsbeispielen anhand der beigefügten Zeichnungen. Von den Figuren zeigen:
- Fig. 1: eine schematische Ansicht einer Vorrichtung zum Herstellen eines dreidimensionalen Objekts gemäß der vorliegenden Erfindung;
- Fig. 2: eine perspektivische Ansicht des Rotationsbeschichters gemäß der vorliegenden Erfindung;
- Fig. 3: eine Einzelheit A aus der Fig. 2;
- Fig. 4: eine perspektivische Ansicht des Rotationsbeschichters gemäß der vorliegenden Erfindung;
- Fig. 5: eine Einzelheit B aus der Fig. 2;
- Fig. 6: eine Draufsicht des Rotationsbeschichters gemäß der vorliegenden Erfindung;
- Fig. 7: eine Draufsicht auf den Rotationsbeschichter und eine Arbeitsplatte in der Vorrichtung nach Fig. 1; und
- Fig. 8: eine Draufsicht auf den Rotationsbeschichter und die Arbeitsplatte in der Vorrichtung nach Fig. 1.

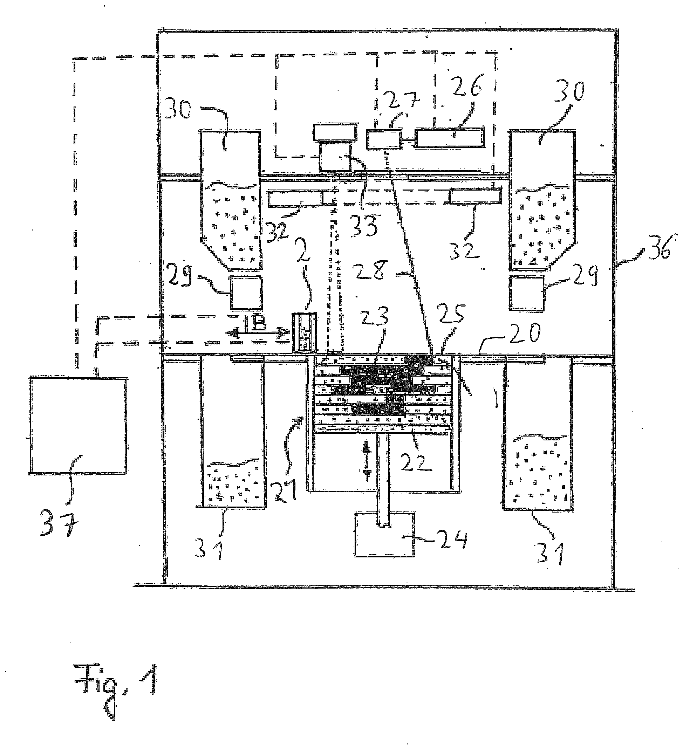

Die Fig. 1 zeigt eine Lasersintervorrichtung als Ausführungsbeispiel einer Vorrichtung zur Herstellung eines dreidimensionalen Objekts, in der der erfindungsgemäße Rotationsbeschichter verwendet wird. Die Lasersintervorrichtung weist einen nach oben offenen Behälter 21 auf. In dem Behälter 21 ist eine Plattform 22 zum Tragen des zu bildenden dreidimensionalen Objekts 23 vorgesehen. Die Plattform 22 ist mittels eines Antriebs 24 in dem Behälter 21 in vertikaler Richtung auf und ab bewegbar. Der obere Rand des Behälters 21 definiert ein Baufeld 25. In der gleichen Ebene aber radial außerhalb des Baufelds 25 ist eine Arbeitsplatte 20 angeordnet. Oberhalb des Baufelds 25 ist eine Bestrahlungseinrichtung 26 in Form eines Lasers angeordnet, die einen gerichteten Laserstrahl 28 abgibt, der über eine Ablenkvorrichtung 27 auf das Baufeld 25 abgelenkt wird. Anstelle des Lasers kann auch ein Elektronenstrahl verwendet werden, der über eine entsprechende Ablenkvorrichtung auf das Baufeld 25 abgelenkt wird.

Es ist ein Beschichtungselement 2 vorgesehen, das eine Schicht eines zu verfestigenden pulverförmigen Materials auf die Oberfläche der Plattform 22 oder eine zuletzt verfestigte Schicht aufbringt und glättet. Das Beschichtungselement 2 kann als eine Klinge aus einem Metall, einem hitzebeständigen Kunststoff oder einer Keramik ausgebildet sein. Das Beschichtungselement 2 ist über dem Baufeld 25 in einer Richtung B hin und her bewegbar.

Durch zwei Dosiervorrichtungen 29 links und rechts vom Baufeld 25 wird Pulver aus zwei Pulvervorratsbehältern 30 auf die Arbeitsplatte 20 aufgebracht. Ferner sind links und rechts vom Baufeld 25 zwei Überlaufbehälter 31 vorgesehen, die das beim Beschichten anfallende überschüssige Pulver aufnehmen können. Alternativ können nur eine Dosiervorrichtung 29, nur ein Pulvervorratsbehälter 30 und nur ein Überlaufbehälter 31 verwendet werden.

Die Vorrichtung weist vorzugsweise eine über dem Baufeld 25 angeordnete Heizeinrichtung 32 zum Heizen des Pulverbetts und insbesondere zum Vorwärmen einer aufgetragenen aber noch nicht gesinterten (verfestigten) Pulverschicht auf eine für das Sintern geeignete Arbeitstemperatur auf. Die Heizeinrichtung 32 ist beispielsweise in Form von einem oder mehreren Heizstrahlern wie zum Beispiel Infrarotstrahler ausgebildet, die oberhalb des Baufelds 25 so angeordnet sind, dass die aufgetragene Pulverschicht gleichmäßig erwärmt werden kann. In einem Abstand oberhalb des Baufelds 25 ist eine zum Beispiel als Pyrometer oder IR-Kamera ausgebildete Temperaturmesseinrichtung 33 vorgesehen, die zum Messen der Temperatur der zuletzt aufgetragenen bzw. obersten Pulverschicht dient. Durch eine Prozesskammer 36 ist das Baufeld 25 von der Umgebung abgeschlossen. Dadurch kann der Prozess unter Abschluss von Luft durchgeführt, und eine Oxidation des Pulvers kann verhindert werden.

Eine Steuer- und/oder Regeleinrichtung 37 dient zum Antreiben des Beschichtungselements 2. Hierzu ist die Steuer- und/oder Regeleinrichtung 37 mit einer nicht dargestellten Antriebsvorrichtung des Beschichtungselements 2 verbunden. Die Steuer- und/oder Regeleinrichtung 37 kann vorzugsweise auch die Plattform 22, die Heizeinrichtung 32, die Bestrahlungseinrichtung 26 und die Ablenkeinrichtung 27 steuern bzw. regeln.

Im Folgenden wird der Betrieb der Lasersintervorrichtung beschrieben.

Zunächst befindet sich der das Beschichtungselement 2 an seiner äußersten Position in der Prozesskammer 36, zum Beispiel über einer Öffnung des Überlaufbehälters 31, und die Dosiervorrichtung 29 dosiert eine aus dem Pulvervorratsbehälter 30 bereitgestellte Pulvermenge auf die Arbeitsplatte 20.

Danach wird das Beschichtungselement 2 parallel zur Oberfläche des Baufelds 25 verfahren, so dass eine Pulverschicht mit einer definierten Dicke auf die Plattform 22 oder auf eine zuvor verfestigte Schicht aufgebracht und geglättet wird.

Nach dem Aufbringen der Pulverschicht erfolgt die selektive Verfestigung an dem Querschnitt des Objekts 23 in dieser Schicht entsprechenden Stellen durch Belichtung mit dem Laserstrahl 28 oder Elektronenstrahl in an sich bekannter Art und Weise.

Nach dem Verfestigen einer Schicht wird die Plattform 22 um eine der Schichtdicke entsprechende Strecke abgesenkt, und die zuvor beschriebenen Schritte werden wiederholt, bis die Herstellung des dreidimensionalen Objekts 23 abgeschlossen ist.

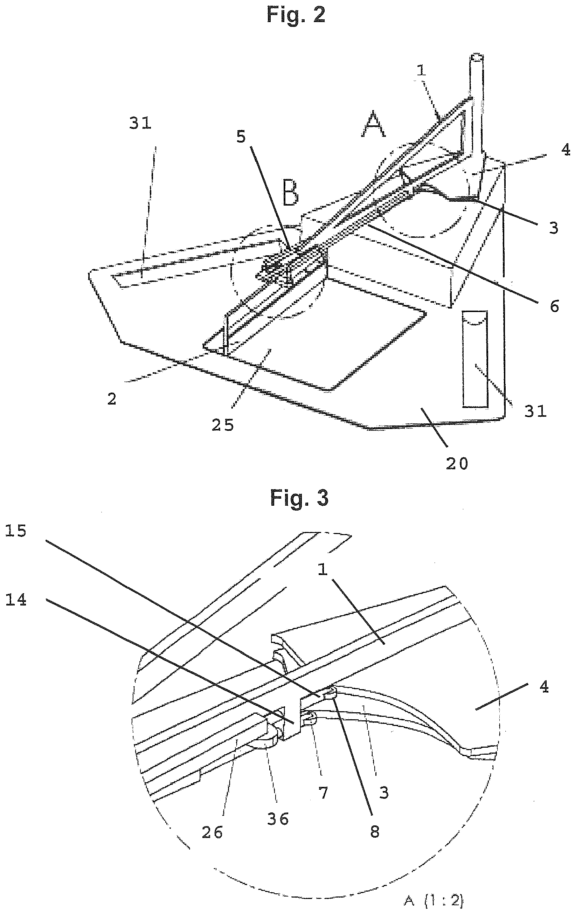

Die Fig. 2 zeigt eine perspektivische Ansicht des Rotationsbeschichters gemäß der vorliegenden Erfindung. Der Rotationsbeschichter weist einen Träger 1 auf, der an einer Drehachse z mit der Vorrichtung drehbar verbunden ist. Des Weiteren weist der Rotationsbeschichter das Beschichtungselement 2 auf, das an den Träger 1 gekoppelt ist und bei der Drehbewegung des Trägers 1 die Pulverschicht in dem Baufeld 25 aufträgt und glättet, wobei das Baufeld 25 senkrecht zur Drehachse z verläuft. Das Beschichtungselement 2 behält seine Orientierung bei der Drehbewegung des Trägers 1 innerhalb des Baufelds 25 im Wesentlichen bei, und das Beschichtungselement 2 führt in seiner Längsrichtung im Wesentlichen keine Bewegung bei der Drehbewegung des Trägers 1 innerhalb des Baufelds 25 durch.

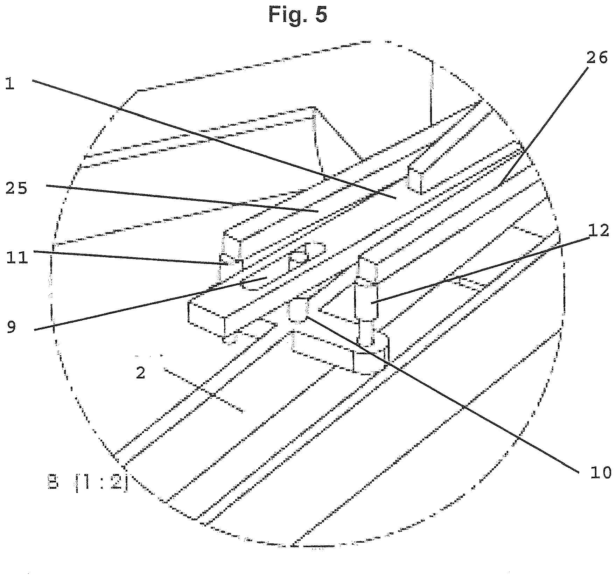

Die Figuren 3 bis 5 zeigen eine Einzelheit A aus der Fig. 2, eine perspektivische Ansicht des Rotationsbeschichters und eine Einzelheit B aus der Fig. 2. In diesen Figuren wird eine Ausgleichsmechanik gezeigt, die die vorstehend beschriebene Bewegung des Beschichtungselements 2 bewirkt. Die Ausgleichsmechanik des Rotationsbeschichters hat eine erste und eine zweite Kulissenscheibe 3, 4, die jeweils an die Vorrichtung angebracht sind und ein Kulissenprofil aufweisen. Die Ausgleichsmechanik des Rotationsbeschichters hat des Weiteren ein erstes und ein zweites Kraftübertragungselement 5, 6, die jeweils ein Gleitelement 7, 8 aufweisen und an dem Träger 1 so geführt sind, dass bei der Drehbewegung des Trägers 1 das Gleitelement 7 des ersten Kraftübertragungselements 5 an dem ersten Kulissenprofil gleitet und das Gleitelement 8 des zweiten Kraftübertragungselements 6 an dem zweiten Kulissenprofil gleitet und sich die Kraftübertragungselemente 5, 6 dadurch relativ zum Träger 1 verschieben. Die Gleitelemente 7, 8 sind vorzugsweise jeweils als Walze ausgeführt.

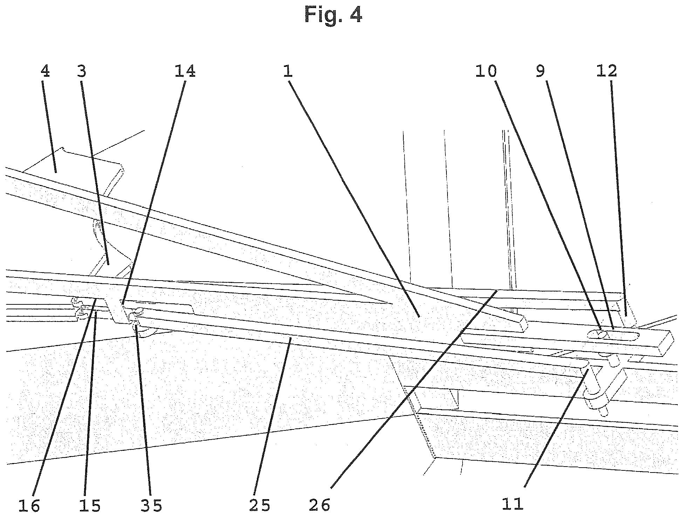

Vorzugsweise weisen die Kraftübertragungselemente 5, 6 gemäß den Figuren 3 und 4 jeweils einen Stößel 15 und 16 und einen Stab 25, 26 auf. Die Stößel 15, 16 sind durch geeignete Linearführungen am Träger 1 geführt. Im dargestellten Ausführungsbeispiel sind die Linearführungen als Durchgangslöcher ausgeführt, die in einem vertikalen Fortsatz 14 am Träger 1 ausgebildet sind. Die Stößel 15, 16 der Kraftübertragungselemente 5, 6 treten übereinander durch die Durchgangslöcher hindurch. Die Gleitelemente 7, 8 sind an einem Ende der Stößel 15, 16 angeordnet, und am anderen Ende der Stößel 15, 16 sind die dazugehörigen Stäbe 25, 26 über Gelenke 36, 35 angelenkt.

Der Träger 1 hat in einem Abstand zur Drehachse z ein im Wesentlichen zur Drehachse z hin ausgerichtetes Langloch 9, und das Beschichtungselement 2 hat einen im Wesentlichen parallel zur Drehachse z angeordneten Zapfen 10, wobei der Zapfen des 10 Beschichtungselements 2 in dem Langloch 9 des Trägers 1 aufgenommen und bewegbar ist. Alternativ kann der Zapfen auch am Träger 1 vorgesehen sein, und das Langloch kann entsprechend im Beschichtungselement 2 angeordnet sein.

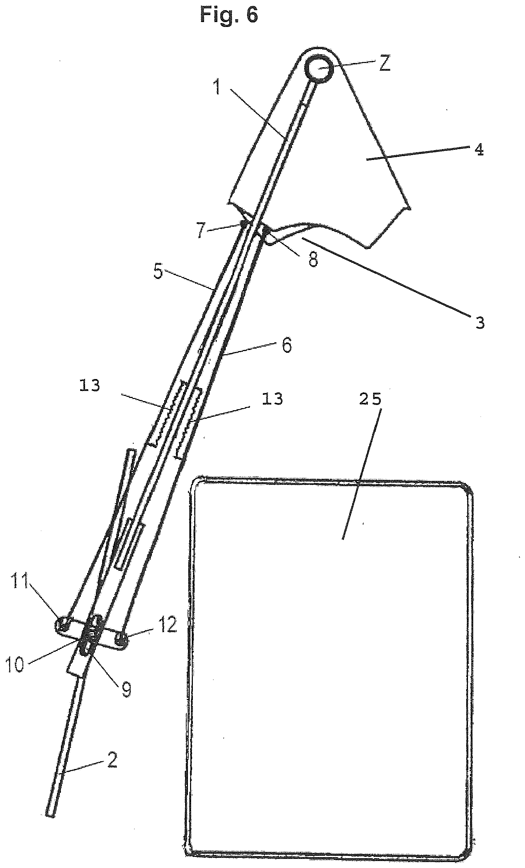

Die Gleitelemente 7, 8 der Kraftübertragungselemente 5, 6 werden jeweils durch in der Fig. 6 dargestellte Federn 13 gegen die entsprechenden Kulissenprofile gedrückt. Im Ausführungsbeispiel der Fig. 6 sind die Federn 13 Zugfedern; sie können alternativ auch als Druckfedern ausgeführt sein. Im dargestellten Ausführungsbeispiel sind die Federn 13 zwischen einem entsprechenden Kraftübertragungselement 5, 6 und dem Träger 1 angeordnet, um das entsprechende Kraftübertragungselement 5, 6 zur Drehachse z zu drücken oder ziehen. Alternativ kann eine Feder (nicht dargestellt) zwischen dem Zapfen 10 des Beschichtungselements 2 und dem Träger 1 angeordnet sein, um den Zapfen 10 zur Drehachse z zu drücken oder zu ziehen.

Das erste Kraftübertragungselement 5 bzw. dessen Stab 25 ist über ein erstes Gelenk 11 an dem Beschichtungselement 2 angelenkt, und das zweite Kraftübertragungselement 6 bzw. dessen Stab 26 ist über ein zweites Gelenk 12 an dem Beschichtungselement 2 angelenkt, wobei das erste und das zweite Gelenk 11, 12 von dem Zapfen 10 des Trägers 1 oder des Beschichtungselements 2 beabstandet sind.

Auch wenn dies nicht im Detail dargestellt ist, kann das Beschichtungselement 2 über den Zapfen 10 des Beschichtungselements 2 am Träger 1 aufgehängt sein. Der Zapfen 10 kann zum Beispiel ein T-Profil mit einem oben angeordneten Flansch aufweisen, der am Träger 1 drehbar aufliegt. Alternativ kann das Beschichtungselement 2 über die Gelenke 11, 12 an den Kraftübertragungselementen 5, 6 aufgehängt sein.

Vorzugsweise haben die Kulissenscheiben 3, 4 jeweils die Gestalt einer Nockenscheibe. Das Kulissenprofil ist vorzugsweise durch eine Sinus- oder Kosinusfunktion beschrieben, die von einer Länge des Trägers 1 und einem Drehwinkelbereich abhängt, in dem das Beschichtungselement 2 den gewünschten Bewegungsablauf innerhalb des Baufelds 25 erfüllt.

Durch diese beispielhafte Konfiguration ist es möglich, dass das Beschichtungselement 2 seine Orientierung bei der Drehbewegung des Trägers 1 innerhalb des Baufelds 25 im Wesentlichen beibehält. Durch das Langloch 9 und den Zapfen 10 wird ferner der Hub kompensiert, den das Beschichtungselement 2 aufgrund der Orbitalbewegung durchführen würde. Im Ergebnis führt das Beschichtungselement 2 in seiner Längsrichtung bei der Drehbewegung des Trägers 1 innerhalb des Baufelds 25 im Wesentlichen keine Bewegung durch. Zusammenfassend bewirkt die Ausgleichsmechanik des Rotationsbeschichters, dass das Beschichtungselement 2 keine Orbital- bzw. Kreisbewegung durchführt, sondern innerhalb eines vorbestimmten Drehbereichs des Trägers 1 translatorisch über einen geraden Bewegungspfad verfahren wird.

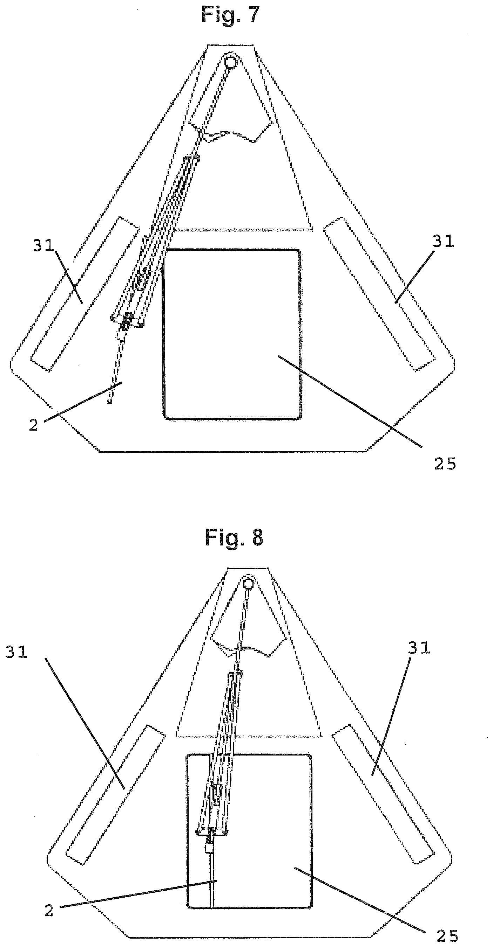

Der Bewegungsablauf des Beschichtungselements 2 ist in den Figuren 7 und 8 dargestellt.

Die Startposition des Beschichtungselements 2 für einen Verfahrweg von links nach rechts befindet sich zum Beispiel über dem linken Überlaufbehälter 31, um das aus der Dosiervorrichtung 29 dosierte Pulver zum Baufeld 25 transportieren zu können. Das Beschichtungselement 2 steht am Anfang achsparallel zum Überlaufbehälter 31.

Während der Drehbewegung des Trägers 1 zum rechten Rand des Baufelds 25 richtet sich das Beschichtungselement 2 parallel zum linken Rand des Baufelds 25 aus, um dann in einer linearen Bewegung über das Baufeld 25 zu fahren.

Im weiteren Verlauf richtet sich das Beschichtungselement 2 achsparallel zu dem rechten Überlaufbehälter 31 aus. Der Verfahrweg des Beschichtungselements 2 ist abgeschlossen, wenn das Beschichtungselement 2 zum Beispiel mittig über dem rechten Überlaufbehälter 31 an einer Startposition für die Fahrt von rechts nach links steht.

Die Erfindung wurde für eine Lasersintervorrichtung beschrieben, bei der als Strahlungsquelle ein Laser 26 verwendet wurde. Jede andere Strahlungsquelle ist aber auch denkbar, mit der eine elektromagnetische oder Teilchenstrahlung in das pulverförmige Aufbaumaterial eingebracht werden kann. So kann zum Beispiel eine Strahlungsquelle für inkohärente Lichtstrahlung, für IR-Strahlung, für Röntgenstrahlung oder für Elektronenstrahlung als Strahlungsquelle verwendet werden. Dementsprechend ist ein pulverförmiges Aufbaumaterial zu verwenden, das mit der jeweiligen Strahlung verfestigt werden kann. Der erfindungsgemäße Rotationsbeschichter ist demnach nicht nur auf Lasersintern anwendbar, sondern auf alle pulverbasierten, generativen Verfahren, bei denen ein Werkstoff bzw. ein Pulvermaterial verwendet wird, welches durch den Energiestrahl verfestigt wird. Der erfindungsgemäße Rotationsbeschichter kann auch bei Laserschmelzvorrichtungen verwendet werden. Die Vorrichtung zur Herstellung eines dreidimensionalen Objekts kann auch eine Laserschmelzvorrichtung oder eine Vorrichtung mit Maskenbelichtung sein.

Es ist möglich, mehrere Beschichtungselemente 2 für ein oder mehrere Baufelder 25 zu realisieren. Dabei können die verschiedenen Baufelder 25 getrennt mit unterschiedlichen pulverförmigen Materialien beschickt werden.

Die Zufuhr des Pulvers zu dem Beschichtungselement 2 wurde so beschrieben, dass es von oben durch Dosiervorrichtungen 29 aus Vorratsbehältern 30 zugeführt wird. Es ist jedoch auch möglich, das Pulver von unten aus einem Vorratsbehälter zuzuführen. Insbesondere ist es möglich einen nach oben offenen Vorratsbehälter mit einem verfahrbaren Boden vorzusehen, wobei der Boden zum Zuführen von pulverförmigen Material angehoben wird.

Der Schutzumfang beschränkt sich nicht auf die dargestellten Ausführungsbeispiele, sondern er umfasst weitere Änderungen und Abwandlungen, sofern diese innerhalb des durch die beigefügten Ansprüche definierten Umfangs liegen.

## Patentansprüche

1. Rotationsbeschichter für eine Vorrichtung zum generativen Herstellen eines Objekts, mit:
einem Träger (1), der an einer Drehachse (z) mit der Vorrichtung drehbar verbindbar ist, und
einem Beschichtungselement (2), das an den Träger (1) gekoppelt und geeignet ist, bei der Drehbewegung des Trägers (1) eine Pulverschicht in der Vorrichtung in einer Ebene aufzutragen oder zu glätten, die senkrecht zur Drehachse (z) verläuft;
wobei das Beschichtungselement (2) so angeordnet ist, dass es seine Orientierung bei der Drehbewegung des Trägers (1) innerhalb eines vorbestimmten Drehbereichs im Wesentlichen beibehält; und
wobei das Beschichtungselement (2) so angeordnet ist, dass es bei der Drehbewegung des Trägers (1) innerhalb eines vorbestimmten Drehbereichs im Wesentlichen keine Bewegung in einer Längsrichtung des Beschichtungselements (2) durchführt.

2. Rotationsbeschichter gemäß Anspruch 1, des Weiteren mit:
einer ersten und einer zweiten Kulissenscheibe (3, 4), die jeweils an der Vorrichtung anbringbar sind und ein Kulissenprofil aufweisen;
einem ersten und einem zweiten Kraftübertragungselement (5, 6), die jeweils ein Gleitelement (7, 8) aufweisen und an dem Träger (1) so geführt sind, dass bei der Drehbewegung des Trägers (1) das Gleitelement (7) des ersten Kraftübertragungselements (5) an dem ersten Kulissenprofil gleitet und das Gleitelement (8) des zweiten Kraftübertragungselements (6) an dem zweiten Kulissenprofil gleitet und sich die Kraftübertragungselemente (5, 6) dadurch relativ zum Träger (1) verschieben;
wobei der Träger (1) in einem Abstand zur Drehachse (z) ein im Wesentlichen zur Drehachse (z) hin ausgerichtetes Langloch (9) oder einen parallel zur Drehachse (z) angeordneten Zapfen aufweist;
das Beschichtungselement (2) einen parallel zur Drehachse (z) angeordneten Zapfen (10) oder ein im Wesentlichen zur Drehachse (z) hin ausgerichtetes Langloch aufweist, wobei der Zapfen (10) des Beschichtungselements (2) in dem Langloch (9) des Trägers (1) aufgenommen und bewegbar ist oder der Zapfen des Trägers (1) in dem Langloch des Beschichtungselements (2) aufgenommen und bewegbar ist;
das erste Kraftübertragungselement (5) über ein erstes Gelenk (11) an dem Beschichtungselement (2) angelenkt ist und das zweite Kraftübertragungselement (6) über ein zweites Gelenk (12) an dem Beschichtungselement (2) angelenkt ist, und
das erste und das zweite Gelenk (11, 12) von dem Zapfen (10) des Trägers (1) oder des Beschichtungselements (2) beabstandet sind.

3. Rotationsbeschichter gemäß Anspruch 2,
wobei das Beschichtungselement (2) über den Zapfen (10) des Trägers (1) oder des Beschichtungselements (2) am Träger (1) aufgehängt ist, oder wobei das Beschichtungselement (2) über die Gelenke (11, 12) an den Kraftübertragungselementen (5, 6) aufgehängt ist.

4. Rotationsbeschichter gemäß Anspruch 2 oder 3,
wobei die Gleitelemente (7, 8) der Kraftübertragungselemente (5, 6) durch zumindest eine Feder (13) gegen die entsprechenden Kulissenprofile gedrückt werden.

5. Rotationsbeschichter gemäß Anspruch 4,
wobei zumindest eine erste Feder (13) und eine zweite Feder (13) vorgesehen sind, die zwischen einem entsprechenden Kraftübertragungselement (5, 6) und dem Träger (1) angeordnet sind, um das entsprechende Kraftübertragungselement (5, 6) zur Drehachse (z) zu drücken oder ziehen.

6. Rotationsbeschichter gemäß Anspruch 4,
wobei die zumindest eine Feder zwischen dem Zapfen (10) des Beschichtungselements (2) und dem Träger (1) angeordnet ist, um den Zapfen (10) zur Drehachse (z) zu drücken oder ziehen.

7. Rotationsbeschichter gemäß einem der Ansprüche 2 bis 6,
wobei die Kraftübertragungselemente (5, 6) Stäbe (25, 26) und/oder Stößel (15, 16) aufweisen, wobei die Stößel (15, 16) durch Linearführungen am Träger (1) geführt sind.

8. Rotationsbeschichter gemäß einem der Ansprüche 2 bis 7,
wobei die Gleitelemente (7, 8) jeweils eine Walze aufweisen.

9. Rotationsbeschichter gemäß einem der Ansprüche 2 bis 8,
wobei die Kulissenscheiben (3, 4) jeweils die Gestalt einer Nockenscheibe haben.

10. Rotationsbeschichter gemäß dem vorherigen Anspruch,
wobei das Kulissenprofil durch eine Sinus- oder Kosinusfunktion beschrieben ist, die von einer Länge des Trägers (1) und einem Drehwinkelbereich abhängt, in dem das Beschichtungselement (2) den im Anspruch 1 definierten Bewegungsablauf erfüllt.

11. Vorrichtung zum generativen Herstellen eines Objekts, die einen mechanisch geführten Rotationsbeschichter gemäß einem der vorherigen Ansprüche aufweist.

## Claims

1. Rotary coater for a device for the generative production of an object with:
a support (1) which is rotatably connectable to the device at a rotation axis (z) and
a coating element (2) which is coupled to the support (1) and which is suited to apply or smoothen a powder layer in the device in a plane perpendicular to the rotation axis (z) during the rotational motion of the support (1);
wherein the coating element (2) is arranged such that it essentially maintains its orientation during the rotational motion of the support (1) within a predetermined range of rotation; and
wherein the coating element (2) is arranged such that it does essentially not execute any motion in a longitudinal direction of the coating element (2) during the rotational motion of the support (1) within a predetermined range of rotation.

2. Rotary coater according to claim 1, additionally with:
a first and a second guide plate (3, 4) each of which is attachable to the device and each of which has a guide profile;
a first and a second force-transmitting element (5, 6) each of which has a sliding element (7, 8) and each of which is guided on the support (1) such that during the rotational motion of the support (1), the sliding element (7) of the first force-transmitting element (5) slides on the first guide profile and the sliding element (8) of the second force-transmitting element (6) slides on the second guide profile and that the force-transmitting elements (5, 6) are thereby shifted relative to the support (1);
wherein at a distance from the rotation axis (z), the support (1) has an oblong hole (9) being oriented essentially in the direction of the rotation axis (z) or a peg being arranged parallel to the rotation axis (z);
the coating element (2) has a peg (10) being arranged parallel to the rotation axis (z) or an oblong hole being oriented essentially in the direction of the rotation axis (z), wherein the peg (10) of the coating element (2) is received and moveable in the oblong hole (9) of the support (1) or wherein the peg of the support (1) is received and moveable in the oblong hole of the coating element (2);
the first force-transmitting element (5) is articulated to the coating element (2) via a first articulation (11) and the second force-transmitting element (6) is articulated to the coating element (2) via a second articulation (12), and
the first and the second articulations (11, 12) are spaced apart from the peg (10) of the support (1) or of the coating element (2).

3. Rotary coater according to claim 2,
wherein the coating element (2) is suspended from the support (1) via the peg (10) of the support (1) or of the coating element (2), or wherein the coating element (2) is suspended from the force-transmitting elements (5, 6) via the articulations (11, 12).

4. Rotary coater according to claim 2 or 3,
wherein the sliding elements (7, 8) of the force-transmitting elements (5, 6) are pressed against the respective guide profiles by at least one spring (13).

5. Rotary coater according to claim 4,
wherein at least a first spring (13) and a second spring (13) are provided which are arranged between a respective force-transmitting element (5, 6) and the support (1) in order to push or pull the respective force-transmitting element (5, 6) towards the rotation axis (z).

6. Rotary coater according to claim 4,
wherein the at least one spring is arranged between the peg (10) of the coating element (2) and the support (1) in order to push or pull the peg (10) towards the rotation axis (z).

7. Rotary coater according to one of claims 2 to 6,
wherein the force-transmitting elements (5, 6) have rods and/or tappets (15, 16), wherein the tappets (15, 16) are guided on the support (1) by linear guides.

8. Rotary coater according to one of claims 2 to 7,
wherein each of the sliding elements (7, 8) has a roller.

9. Rotary coater according to of claims 2 to 8,
wherein each of the guide plates (3, 4) has the shape of a cam plate.

10. Rotary coater according to the preceding claim,
wherein the guide profile is defined by a sine or cosine function which depends on a length of the support (1) and a range of rotational angles in which the coating element (2) executes the motion profile defined in claim 1.

11. Device for the generative production of an object which comprises a mechanically guided rotary coater according to one of the preceding claims.

## Revendications

1. Machine d'enduction centrifuge pour un dispositif destiné à la fabrication générative d'un objet, avec :
un support (1), lequel peut être relié de manière rotative au dispositif au niveau d'un axe de rotation (z), et
un élément de revêtement (2), lequel est couplé au support (1) et est apte à appliquer ou lisser une couche de poudre dans le dispositif dans un plan perpendiculaire à l'axe de rotation (z) pendant le mouvement de rotation du support (1);
dans laquelle, l'élément de revêtement (2) est disposé de telle sorte, que ce dernier maintienne substantiellement son orientation au sein d'une plage de rotation prédéterminée pendant le mouvement de rotation du support (1); et
dans laquelle, l'élément de revêtement (2) est disposé de telle sorte, que ce dernier ne réalise substantiellement aucun mouvement dans une direction longitudinale de l'élément de revêtement (2) au sein d'une plage de rotation prédéterminée pendant le mouvement de rotation du support (1).

2. Machine d'enduction centrifuge selon la revendication 1, laquelle comprend en outre :
une première et une deuxième rondelle à coulisse (3, 4), chacune d'elles pouvant être attachée au dispositif et possédant un profile à coulisse ;
un premier et un deuxième élément de transmission de force (5, 6), chacun d'eux présentant un élément coulissant (7, 8) et étant guidé sur le support (1), de telle sorte que durant le mouvement de rotation du support (1), l'élément coulissant (7) du premier élément de transmission de force (5) coulisse sur le premier profile à coulisse et que l'élément coulissant (8) du deuxième élément de transmission de force (6) coulisse sur le deuxième profile à coulisse, et que les éléments de transmission de force (5, 6) se décalent ainsi par rapport au support (1) ;
dans laquelle, le support (1) présente, à une certaine distance de l'axe de rotation (z), un trou oblong (9) orienté substantiellement en direction de l'axe de rotation (z) ou un tenon disposé parallèlement à l'axe de rotation (z) ;
l'élément de revêtement (2) présente un tenon (10) disposé parallèlement à l'axe de rotation (z) ou un trou oblong orienté substantiellement dans la direction de l'axe de rotation (z), dans laquelle le tenon (10) de l'élément de revêtement (2) est logé et peut être déplacé dans le trou oblong (9) du support (1), ou dans laquelle le tenon du support (1) est logé et peut être déplacé dans le trou oblong de l'élément de revêtement (2) ;
le premier élément de transmission de force (5) est articulé à l'élément de revêtement (2) par l'intermédiaire d'une première articulation (11) et le deuxième élément de transmission de force (6) est articulé à l'élément de revêtement (2) par l'intermédiaire d'une deuxième articulation (12), et
la première et la deuxième articulations (11, 12) sont espacées du tenon (10) du support (1) ou de l'élément de revêtement (2).

3. Machine d'enduction centrifuge selon la revendication 2,
dans laquelle, l'élément de revêtement (2) est accroché au support (1) par l'intermédiaire du tenon (10) du support (1) ou de l'élément de revêtement (2), ou dans laquelle l'élément de revêtement (2) est accroché aux éléments de transmission de force (5, 6) par l'intermédiaire des articulations (11, 12).

4. Machine d'enduction centrifuge selon la revendication 2 ou 3,
dans laquelle, les éléments de coulissement (7, 8) des éléments de transmission de force (5, 6) sont comprimés par au moins un ressort (13) contre les profiles à coulisse correspondants.

5. Machine d'enduction centrifuge selon la revendication 4,
dans laquelle, au moins un premier ressort (13) et un deuxième ressort (13) sont prévus, lesquels sont disposés entre un élément de transmission de force (5, 6) correspondant et le support (1), pour pousser ou tirer l'élément de transmission de force (5, 6) correspondant en direction de l'axe de rotation (z).

6. Machine d'enduction centrifuge selon la revendication 4,
dans laquelle, le au moins un ressort est disposé entre le tenon (10) de l'élément de revêtement (2) et le support (1), pour pousser ou tirer le tenon (10) en direction de l'axe de rotation (z).

7. Machine d'enduction centrifuge selon l'une des revendications 2 à 6,
dans laquelle, les éléments de transmission de force (5, 6) présentent des tiges (25, 26) et/ou des mandrins (15, 16), dans laquelle les mandrins (15, 16) sont guidés sur le support (1) par des guidages linéaires.

8. Machine d'enduction centrifuge selon l'une des revendications 2 à 7,
dans laquelle, chacun des éléments coulissants (7, 8) présente un rouleau.

9. Machine d'enduction centrifuge selon l'une des revendications 2 à 8,
dans laquelle, chacune des rondelles à coulisse (3, 4) présente la forme d'un disque à cames.

10. Machine d'enduction centrifuge selon la revendication ci-dessus,
dans laquelle, le profile à coulisse est défini par une fonction de sinus ou de cosinus qui dépend d'une longueur du support (1) et d'une plage d'angle de rotation dans laquelle l'élément de revêtement (2) réalise le cycle de mouvement défini à la revendication 1.

11. Dispositif destiné à la fabrication générative d'un objet, lequel dispositif comprend une machine d'enduction centrifuge à guidage mécanique selon l'une des revendications précédentes.
